# FASCICULE DE BREVET EUROPEEN

(11) **EP 2 607 222 B1**
(45) Date de publication et mention de la délivrance du brevet: **22.10.2014**
(21) Numéro de dépôt: 12197555.1
(22) Date de dépôt: 17.12.2012
(51) Int. Cl.: B62M 3/08

(54) **Pédale de bicyclette du type à enclenchement et déclenchement automatiques**
Fahrradpedal vom Typ mit automatischem Ein- und Ausrasten
Bicycle pedal with automatic engagement and disengagement

(30) Priorité: 22.12.2011 FR 1162277
(43) Date de publication de la demande: 26.06.2013
(73) Titulaire: Time Sport International, 38090 Vaulx Milieu (FR)
(72) Inventeur: Servignat, Hervé, 38300 Succieu (FR); Chappuis, Fabien, 38110 La Tour du Pin (FR)
(74) Mandataire: Michardière, Bernard

(56) Documents cités:
- EP-A1- 1 063 161
- FR-A1- 2 862 041
- FR-A1- 2 868 750
- US-A1- 2009 139 369

## Description

L'invention est relative à une pédale de bicyclette à enclenchement et déclenchement automatiques, du genre de celles qui comprennent un corps monté rotatif sur un axe de pédale avec :
- un moyen de butée frontale propre à coopérer avec une surface de butée conjuguée prévue sur une cale fixée sous la semelle de chaussure de l'utilisateur ;
- un organe de maintien monté rotatif autour d'un axe géométrique parallèle à celui de la pédale, propre à être appliqué contre la cale par un élément de flexion pour assurer l'accrochage de la cale à la pédale, la direction moyenne longitudinale de l'élément de flexion étant orthogonale à l'axe de la pédale, une extrémité de l'élément de flexion étant immobilisée contre le corps, l'autre extrémité étant en appui contre l'organe de maintien.

Une pédale de ce type est connue, notamment d'après WO 2008/129 145, au nom de la Société déposante.

Bien qu'une pédale conforme à ce document donne entière satisfaction, il est souhaitable d'en diminuer le poids, et de simplifier son montage, notamment en vue de le rendre plus rapide. Document US 2009/139369 A1 est considéré comme étant l'état de l'art le plus proche et montre le préambule de la revendication 1.

Selon l'invention, une pédale de bicyclette du genre défini précédemment est caractérisée en ce que l'axe d'articulation de l'organe de maintien est constitué par une tige qui s'étend transversalement sous l'élément de flexion, lequel est en appui sur ledit axe d'articulation, l'élément de flexion travaillant en flexion sur trois points.

L'élément de flexion est avantageusement maintenu par appui simple, sans encastrement, contre le corps de pédale et contre l'organe de maintien de sorte que le montage est facile et rapide.

De préférence, la tige formant axe de rotation de l'organe de maintien présente dans sa zone médiane, propre à venir en appui contre l'élément de flexion, des méplats répartis sur sa circonférence et situés à des distances différentes de l'axe géométrique de la tige, de sorte que par rotation de la tige dans des paliers prévus dans le corps de pédale, il est possible de régler la dureté du rappel exercé par l'élément de flexion.

Le corps de pédale peut comprendre deux extensions s'étendant vers l'arrière, encadrant l'organe de maintien, et comportant les paliers pour l'axe de rotation de cet organe de maintien. Les deux extensions vers l'arrière du corps sont séparées par un espace libre dépourvu de toute traverse.

L'organe de maintien peut être constitué par un arceau en forme générale de U présentant deux branches orientées radialement, reliées par une partie centrale contre laquelle vient appuyer une extrémité de l'élément de flexion.

L'élément de flexion est constitué par une plaque de flexion, en particulier en matériau composite.

De préférence, la pédale comporte un cliquet propre à retenir l'organe de maintien dans une position ouverte lors du dégagement de la cale à l'encontre du rappel exercé par l'élément de flexion, et à libérer cet organe de maintien lors de l'engagement de la cale.

Ce cliquet comporte avantageusement une lame ressort de rappel en position ouverte. La lame ressort peut être métallique, surmoulée avec le cliquet réalisé en matière plastique.

Le cliquet peut avoir la forme d'un U dont les extrémités des branches éloignées de la traverse sont munies de pions alignés orientés vers l'extérieur, servant d'articulation du cliquet sur le corps de pédale.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une vue d'une pédale selon l'invention en position ouverte, en coupe verticale longitudinale suivant un plan orthogonal à l'axe de la pédale.
Fig. 2 montre, semblablement à Fig. 1, la pédale avec une cale accrochée, c'est-à-dire la pédale en position fermée.
Fig. 3 est une vue en perspective de dessous du corps de pédale et de l'organe de maintien, les autres éléments de la pédale ayant été retirés.
Fig. 4 est une vue en perspective depuis l'arrière gauche du corps de pédale et du cliquet, les autres pièces de la pédale ayant été retirées, hormis l'axe lui-même.
Fig. 5 est une vue en perspective de dessous de la pédale complète avec une cale accrochée.
Fig. 6 est une vue en perspective de l'élément de flexion, sans l'organe de maintien, du cliquet avec lame ressort surmoulée et de la plate-forme d'appui, sans le corps de pédale, mais pour clarifier l'orientation une bague, qui est traversée par l'axe de la pédale assemblée, a été représentée.
Fig. 7 est une vue en perspective de dessous de l'organe de maintien, de la plate-forme, de l'élément de flexion et de la lame ressort du cliquet, lequel n'est pas représenté, ni le corps de pédale, mais pour clarifier l'orientation une bague, qui est traversée par l'axe de la pédale assemblée, a été représentée, et
Fig. 8 est une vue en perspective du cliquet.

En se reportant aux dessins, on peut voir une pédale 1 de bicyclette à enclenchement et déclenchement automatiques. La pédale représentée est destinée à être montée du côté droit de la bicyclette. La constitution de la pédale gauche serait similaire, symétrique par rapport à un plan vertical longitudinal.

Par la suite, les termes "avant" et "arrière" sont à comprendre pour une pédale en position horizontale montée sur une bicyclette, et selon le sens de progression normal de la bicyclette.

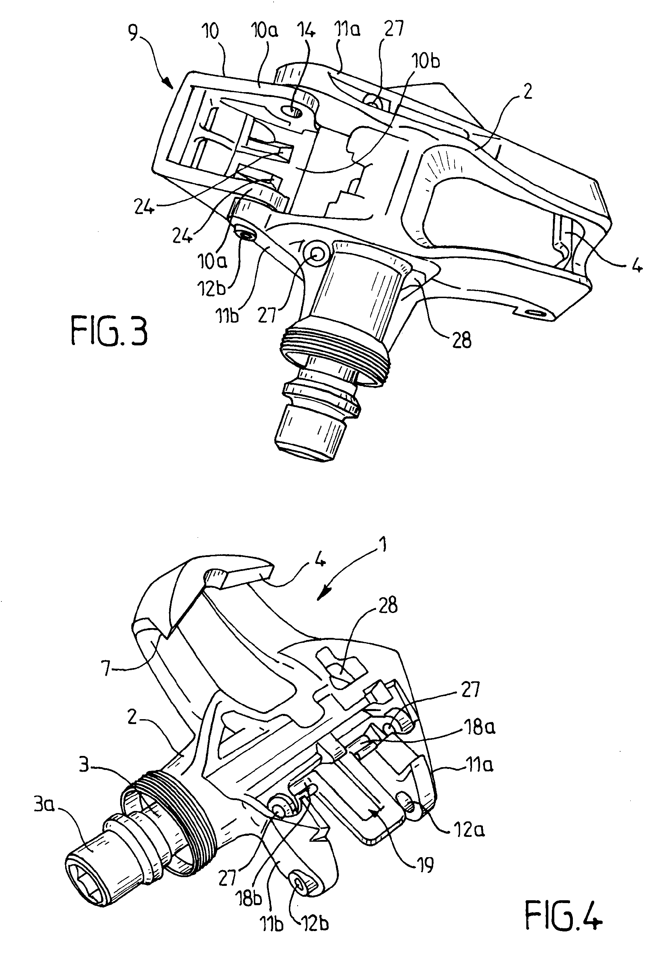

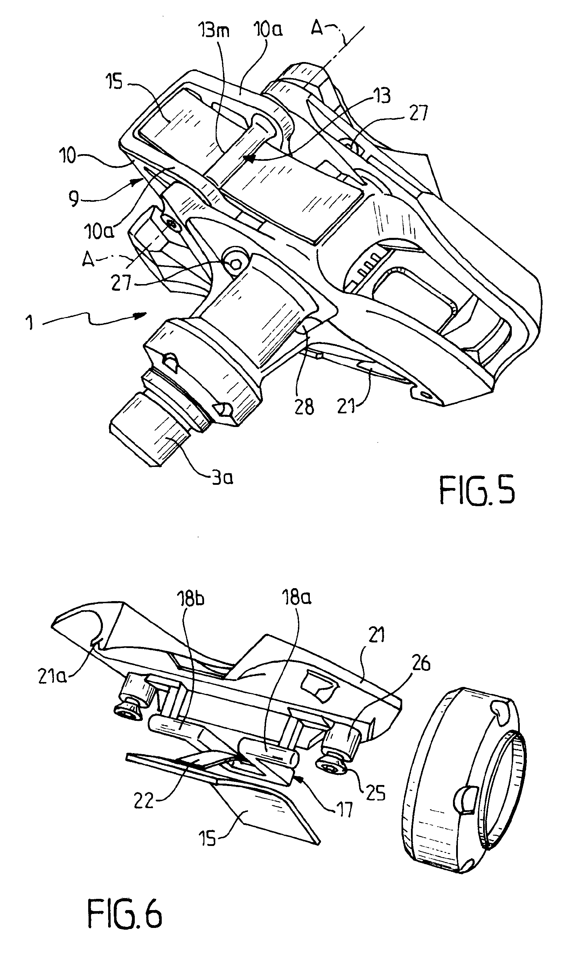

La pédale 1 comprend un corps 2 rotatif sur un axe 3 qui fait saillie d'un côté du corps par une partie 3a (Fig. 4 et 5) prévue pour le montage à l'extrémité d'une manivelle.

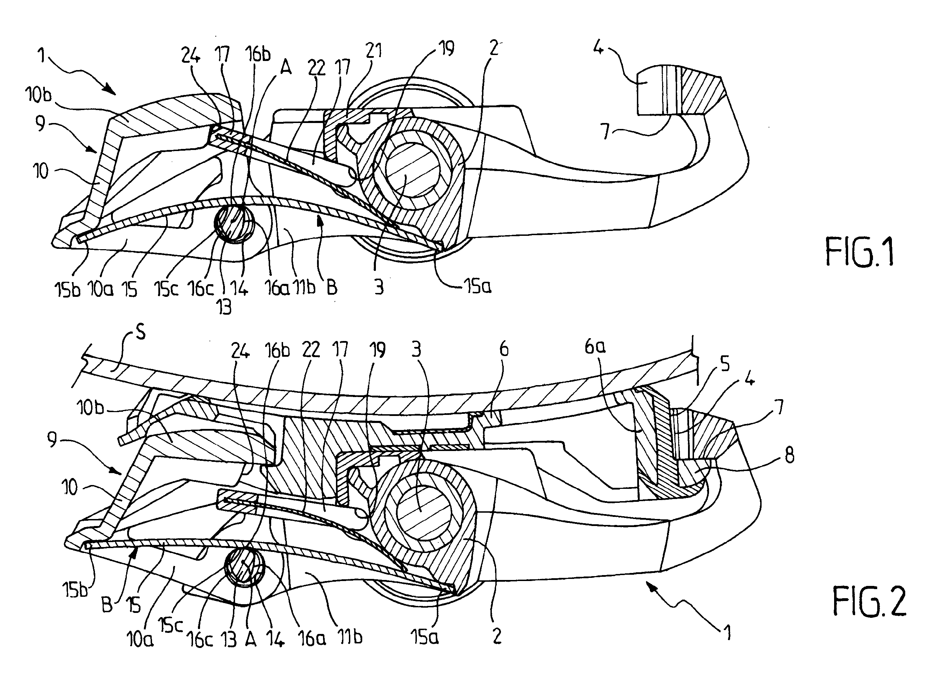

La pédale 1 comporte, sur au moins une face du corps, un moyen de butée frontale 4 propre à coopérer avec une surface de butée conjuguée 5 prévue sur une cale 6 fixée sous la semelle S (Fig. 2) de la chaussure du cycliste. La cale 6 comporte une partie 6a en saillie vers le bas, formant une came. La butée 5 est constituée par la face frontale de la saillie 6a.

Un rebord 7 situé à l'avant de la pédale forme un retour vers l'axe 3. Un bec 8 prévu à l'avant de la cale 6 vient s'engager sous le rebord 7.

Un organe de maintien 9 est monté rotatif autour d'un axe géométrique d'articulation A parallèle à l'axe de la pédale. Dans la réalisation représentée, l'axe A est situé en arrière de l'axe 3 de la pédale et plus bas que cet axe lorsque la pédale est horizontale. L'organe de maintien 9 est avantageusement constitué par un arceau 10 en forme générale de U dont la concavité est tournée vers le bas et vers l'avant. Cet arceau présente deux branches 10a orientées radialement par rapport à l'axe géométrique de rotation de l'arceau. Les branches 10a sont reliées, à l'extrémité opposée à l'axe géométrique d'articulation A, par une partie 10b formant traverse, dont la section transversale visible sur Fig. 2 est en forme d'angle obtus, légèrement supérieur à 90°.

En variante, l'arceau 10 pourrait se trouver en avant de l'axe 3, avec sa concavité tournée vers l'arrière. La came 6a serait aussi tournée en sens opposé.

L'arceau 10 vient s'inscrire dans l'arrière du corps de pédale comprenant deux extensions 11a, 11b (Fig. 3), qui ne sont pas reliées par une traverse et entre lesquelles l'espace est libre pour recevoir l'arceau 10. Chaque extension 11a, 11b comporte, vers son extrémité éloignée de l'axe de la pédale, un palier 12a, 12b. Ces deux paliers sont coaxiaux et propres à recevoir des tourillons cylindriques prévus aux extrémités d'une tige 13 qui s'étend transversalement parallèlement à l'axe de la pédale et qui constitue l'axe d'articulation de l'organe de maintien 9 ou arceau 10. Les branches de l'arceau 10 sont situées de préférence à l'intérieur de l'espace compris entre les extensions 11 a, 11 b, et sont adjacentes aux faces internes de ces extensions. Chaque branche de l'arceau 10 comporte un alésage 14 (Figs. 1 et 2) propre à être traversé et supporté par les tourillons de la tige 13.

L'organe de maintien 9 est propre à être appliqué contre l'arrière de la cale 6 par un élément de flexion B pour assurer l'accrochage de la cale 6 à la pédale, la direction moyenne longitudinale de l'élément de flexion B étant orthogonale à l'axe 3 de la pédale. Cet élément de flexion B est avantageusement constitué par une lame de flexion 15, notamment de forme rectangulaire, avantageusement réalisée en matériau composite. Une extrémité 15a de la lame de flexion 15 est immobilisée contre le corps 2 de pédale. Avantageusement, cette extrémité 15a est en appui simple contre le corps, sans encastrement mais en étant, de préférence, reçue dans une empreinte ouverte vers le bas, correspondant à sa section transversale pour assurer son maintien latéral. L'autre extrémité 15b de la lame de flexion 15 est en appui simple contre le bord inférieur de l'arceau 10 qui peut également présenter une empreinte ouverte vers le bas pour loger cette extrémité 15b et la maintenir latéralement.

La tige 13, formant axe d'articulation de l'arceau 10, s'étend sous la lame de flexion 15 qui est en appui sur cette tige 13 en un point 15c, compris entre les deux extrémités 15a, 15b.

La tige 13 d'articulation de l'arceau 10 présente avantageusement, dans sa zone médiane 13m (Fig. 5) des méplats situés à des distances différentes de l'axe géométrique A de rotation de l'arceau 10.

Selon l'exemple de Figs. 1 et 2, la zone médiane 13m comporte trois méplats 16a, 16b, 16c, la configuration représentée correspondant à celle pour laquelle le méplat 16b est en appui contre la lame de flexion 15. Le terme « méplat » est à comprendre dans un sens large comme englobant aussi bien une portion de surface plane qu'une portion de surface courbe à rayon de courbure supérieur au rayon de la tige 13 et de l'alésage 14.

Par rotation de la tige 13, dans ses paliers d'extrémité 12a, 12b, il est possible de régler la dureté du rappel exercé par la lame de flexion 15, en modifiant la distance du point d'appui de cette lame à l'axe géométrique A.

La tige 13 comporte, à une extrémité au moins, une rainure ou une empreinte accessible de l'extérieur avec un outil pour faire tourner la tige 13 et régler la dureté du rappel élastique de l'arceau 10.

La pédale 1 comporte en outre un cliquet 17 sensible au dégagement et à l'engagement de la cale 6 sur la pédale. Le cliquet 17 est prévu pour retenir l'arceau 10, constituant l'organe de maintien, dans la position ouverte illustrée sur Fig. 1 lors du dégagement de la cale à l'encontre du rappel élastique exercé par la lame de flexion 15.

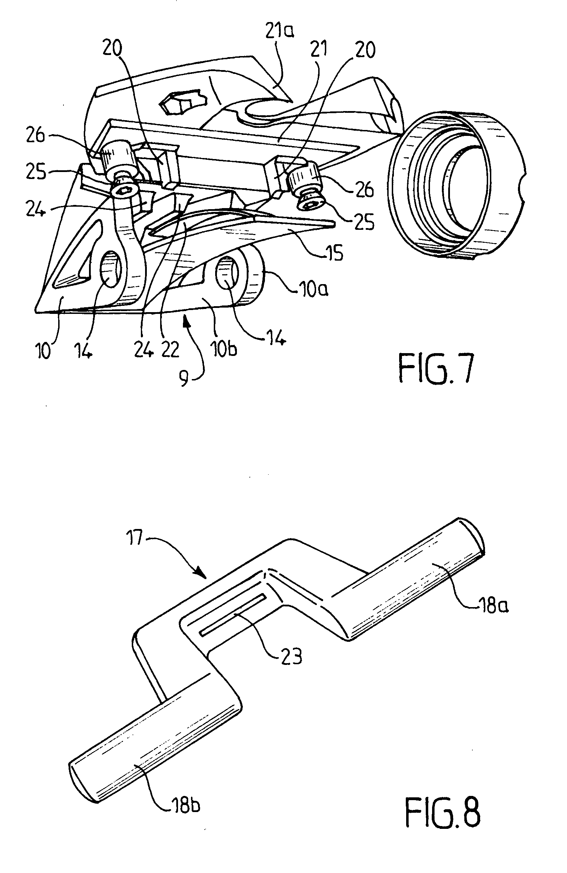

Le cliquet 17 est réalisé sous forme d'un U (Fig. 8) dont les extrémités des branches éloignées de la traverse sont munies de pions 18a, 18b en saillie transversale vers l'extérieur, alignés et coaxiaux. Les pions 18a, 18b constituent l'axe d'articulation du cliquet relativement au corps 2 de pédale. Les pions 18a, 18b sont reçus dans des empreintes 19 (Fig. 1 et 2) en portions de cylindre, prévues dans le corps de pédale pour servir de paliers de rotation du cliquet 17, lequel est disposé au-dessus de la lame de flexion 15.

Le maintien des pions 18a, 18b dans les empreintes 19 peut être assuré par des pattes 20 (Fig. 7) en saillie vers le bas prévues sous une plate-forme 21 démontable.

Le cliquet 17 est rappelé en position haute de blocage de Fig. 1 par une lame ressort 22 qui prend appui, à son extrémité avant, contre la partie inférieure du corps 2 de pédale comme illustré sur Fig. 1 et 2. La partie arrière de la lame ressort 22 est avantageusement encastrée dans une fente 23 (Fig. 8) prévue dans la traverse de la partie en U du cliquet.

Des butées 24 (Fig.2 et 3) sont prévues sous la traverse de l'arceau 10 pour servir d'appui au cliquet 17 en position de retenue illustrée sur Fig. 1.

Avantageusement, la lame ressort 22 est métallique et est surmoulée dans le cliquet 17 en matière plastique, en étant encastrée dans la fente 23. La lame 12 est en appui contre le corps de pédale au niveau de son autre extrémité. En variante, la lame 22 peut être réalisée en matière plastique, et peut être moulée d'une seule pièce avec le cliquet.

La plate-forme 21 constitue l'appui supérieur de la pédale et est fixée de manière démontable à l'aide de vis 25 (Fig.6 et 7) reçues dans des trous taraudés de manchons 26 en saillie sous la plate-forme, propres à s'engager dans des trous 27 (Fig. 5) prévus dans le corps de pédale, en arrière de l'axe de la pédale. Des languettes 21 a (Fig.6 et 7) de clipsage de la partie avant de la plate-forme dans le corps de pédale sont prévues pour coopérer avec des orifices 28 (Fig.5) situés en avant de l'axe de la pédale.

Cette plate-forme 21 peut être aisément remplacée en cas d'usure, ou si l'utilisateur souhaite personnaliser son équipement en choisissant une plate-forme particulière parmi plusieurs coloris et/ou matières au choix.

Le fonctionnement de la pédale est rappelé ci-après.

Lorsque la cale 6 n'est pas présente, ou n'est pas enclenchée, comme illustré sur Fig. 1, le cliquet 17 est en position relevée et son bord arrière est en appui contre les butées 24. L'arceau 10 est maintenu en position "pré-armée", c'est-à-dire en position ouverte, reculée.

Lorsque le cycliste souhaite accrocher la cale 6 à la pédale 1, il engage le bec avant 8 de la cale sous le rebord 7 et fait descendre la partie arrière de la cale, formant une came, dans un espace libre situé en arrière de la plate-forme 21 et en avant de l'arceau 10. Le cycliste ne rencontre pas de résistance sensible pour faire descendre la came dans cet espace libre et pour pousser le cliquet 17 vers le bas, car l'effort exercé par la lame élastique 22 est relativement faible.

L'abaissement du cliquet 17 par rotation dans le sens contraire d'horloge, selon Fig. 2, libère l'arceau 10 qui, sous l'action de la plaque de flexion 15, est rappelé dans le sens d'horloge autour de l'axe géométrique A. La branche transversale de l'arceau 10 vient recouvrir et accrocher un bec arrière de la cale 6. La chaussure sous laquelle est fixée cette cale 6 est alors accrochée à la pédale.

Le déclenchement ou décrochage de la cale 6 est obtenu par un mouvement de rotation du pied et de la cale qui provoque le recul de l'arceau 10 jusqu'à libérer le bec arrière de la cale.

Lorsque la cale 6 se sépare de la pédale 1, alors que l'arceau 10 est en position ouverte, le cliquet 17 est relevé sous l'action de la lame élastique 22 et son bord arrière vient coopérer avec les butées 24 pour retenir l'arceau 10 dans la position ouverte illustrée sur Fig. 1.

Le réglage de la dureté du rappel exercé par la lame de flexion 15 est obtenu en faisant tourner la tige 13.

La pédale est d'une réalisation simple et robuste avec un nombre de pièces réduit, facilitant le montage, notamment grâce à la disposition de la lame de flexion 15 en appui simple à ses extrémités, et de la tige 13 servant de troisième appui.

## Revendications

1. Pédale de bicyclette à enclenchement et déclenchement automatiques, comprenant un corps (2) monté rotatif sur un axe (3) de pédale avec :
- un moyen de butée frontale (4) propre à coopérer avec une surface de butée conjuguée (5) prévue sur une cale (6) fixée sous la semelle de chaussure de l'utilisateur ;
- un organe de maintien (9) monté rotatif autour d'un axe géométrique (A) parallèle à celui de la pédale, propre à être appliqué contre la cale par un élément de flexion (B) pour assurer l'accrochage de la cale à la pédale, la direction moyenne longitudinale de l'élément de flexion étant orthogonale à l'axe de la pédale, une extrémité de l'élément de flexion étant immobilisée contre le corps, l'autre extrémité étant en appui contre l'organe de maintien,
**caractérisée en ce que** l'élément de flexion (B) est constitué par une plaque de flexion (15), et l'axe d'articulation de l'organe de maintien (9) est constitué par une tige (13) qui s'étend transversalement sous la plaque de flexion (15), laquelle est en appui sur ledit axe d'articulation, la plaque de flexion travaillant en flexion sur trois points.

2. Pédale selon la revendication 1, **caractérisée en ce que** la plaque de flexion (15) est en matériau composite.

3. Pédale selon la revendication 1 ou 2, **caractérisée en ce que** la plaque de flexion (15) est maintenue par appui simple, sans encastrement, contre le corps (2) de pédale et contre l'organe de maintien (9).

4. Pédale selon l'une quelconque des revendications précédentes, **caractérisée en ce que** la tige (13) formant axe de rotation de l'organe de maintien, présente dans sa zone médiane (13m) propre à venir en appui contre la plaque de flexion (15) des méplats (16a, 16b, 16c) répartis sur sa circonférence et situés à des distances différentes de l'axe géométrique (A) de la tige, de sorte que par rotation de la tige (13) dans des paliers prévus dans le corps de pédale, il est possible de régler la dureté du rappel exercé par la plaque de flexion (15).

5. Pédale selon l'une quelconque des revendications précédentes, **caractérisée en ce que** le corps de pédale (2) comprend deux extensions (11a, 11b) s'étendant vers l'arrière, encadrant l'organe de maintien (9), et comportant des paliers (12a, 12b) pour l'axe de rotation (13) de cet organe de maintien, les deux extensions (11a, 11b) étant séparées par un espace libre dépourvu de toute traverse.

6. Pédale selon l'une quelconque des revendications précédentes, **caractérisée en ce que** l'organe de maintien (9) est constitué par un arceau (10) en forme générale de U présentant deux branches (10a) orientées radialement, reliées par une partie centrale (10b) contre laquelle vient appuyer une extrémité de l'élément de flexion.

7. Pédale selon l'une quelconque des revendications précédentes, **caractérisée en ce qu'**elle comporte un cliquet (17) propre à retenir l'organe de maintien (9) dans une position ouverte lors du dégagement de la cale (6) à l'encontre du rappel exercé par la plaque de flexion (15), et à libérer cet organe de maintien lors de l'engagement de la cale.

8. Pédale selon la revendication 7, **caractérisée en ce que** le cliquet (17) comporte une lame ressort (22) de rappel en position ouverte.

9. Pédale selon la revendication 8, **caractérisée en ce que** la lame ressort (22) est métallique surmoulée avec le cliquet (17) réalisé en matière plastique.

10. Pédale selon l'une quelconque des revendications 7 à 9, **caractérisée en ce que** le cliquet (17) a la forme d'un U dont les extrémités des branches éloignées de la traverse sont munies de pions (18a, 18b) alignés orientés vers l'extérieur, servant d'articulation du cliquet sur le corps (2) de pédale.

## Patentansprüche

1. Fahrradpedal mit automatischer Einrast- und Ausrastfunktion, mit einem drehbar auf einer Pedalachse (3) montierten Körper (2), mit:
- einer vorderen Anschlageinrichtung (4), die zum Zusammenwirken mit einer Gegenfläche (5) geeignet ist, welche an einem unter der Schuhsohle des Benutzers befestigten Keil (6) vorgesehen ist;
- einem um eine zu der Achse des Pedals parallele geometrische Achse (A) drehbar befestigten Halteorgan (9), das geeignet ist, von einem Biegeelement (B) gegen den Keil gedrückt zu werden, um das Einhaken des Keils in dem Pedal zu gewährleisten, wobei die Längsmittelrichtung des Biegeelements orthogonal zur Pedalache verläuft, wobei ein Ende des Biegeelements unbeweglich an dem Körper anliegt, während das andere Ende an dem Halteorgan anliegt,
**dadurch gekennzeichnet, dass** das Biegeelement (B) durch eine Biegeplatte (15) gebildet ist, und die Gelenkachse des Halteorgans (9) durch eine Stange (13) gebildet ist, die sich in Querrichtung unter der Biegeplatte (15) erstreckt, welche an der Gelenkachse anliegt, wobei die Biegeplatte mit einer Biegung an drei Punkten arbeitet.

2. Pedal nach Anspruch 1, **dadurch gekennzeichnet, dass** die Biegeplatte (15) aus Verbundmaterial besteht.

3. Pedal nach Anspruch 1 oder 2, **dadurch gekennzeichnet, dass** die Biegeplatte (15) durch einfaches Anliegen, ohne Einbau, an dem Pedalkörper (2) und an dem Halteorgan (B) gehalten ist.

4. Pedal nach einem der vorhergehenden Ansprüche, **dadurch gekennzeichnet, dass** die Stange (13), welche die Drehachse des Halteorgans bildet, in ihrer Mittelzone (13m), welche geeignet ist, in Anlage an der Biegeplatte (15) zu gelangen, Abflachungen (16a, 16b, 16c) aufweist, welche über ihren Umfang verteilt und in verschiedenen Abständen von der geometrischen Mittelachse (A) der Stange (13) verteilt sind, derart, dass durch das Drehen der Stange (13) in den im Pedalkörper vorgesehenen Lagern, das Regulieren der Härte der von der Biegeplatte (15) ausgeübten Rückstellkraft möglich ist.

5. Pedal nach einem der vorhergehenden Ansprüche, **dadurch gekennzeichnet, dass** der Pedalkörper (2) zwei sich nach hinten erstreckende Verlängerungen (11a, 11b) aufweist, welche das Halteorgan (9) einrahmen und Lager (12a, 12b) für die Drehachse (13) dieses Halteorgans aufweisen, wobei die beiden Verlängerungen (11a, 11b) durch einen von jeglichen Querstreben freien Freiraum voneinander getrennt sind.

6. Pedal nach einem der vorhergehenden Ansprüche, **dadurch gekennzeichnet, dass** das Halteorgan (9) durch einen im Allgemeinen U-förmigen Bügel (10) gebildet ist, der zwei radial gerichtete Schenkel (10a) aufweist, welche durch ein Mittelteil (10b) verbunden sind, an welchem ein Ende des Biegeelements zur Anlage kommt.

7. Pedal nach einem der vorhergehenden Ansprüche, **dadurch gekennzeichnet, dass** es Sperrklinke (17) aufweist, die geeignet ist, das Halteorgan (9) beim Lösen des Keils (6) entgegen der von der Biegeplatte (15) aufgebrachten Rückstellkraft in einer offenen Position zu halten und das Halteorgan beim Einrasten des Keils freizugeben.

8. Pedal nach Anspruch 7, **dadurch gekennzeichnet, dass** die Sperrklinke (17) eine Blattfeder (22) zur Rückstellung in die offene Position aufweist.

9. Pedal nach Anspruch 8, **dadurch gekennzeichnet, dass** die Blattfeder (22) aus Metall besteht und mit der aus Kunststoff gebildeten Sperrklinke (17) umspritzt ist.

10. Pedal nach einem der Ansprüche 7 bis 9, **dadurch gekennzeichnet, dass** die Sperrklinke (17) die Form eines U aufweist, dessen von der Traverse entfernte Schenkelenden mit miteinander fluchtenden, nach außen gerichteten Stiften (18a, 18b) versehen sind, die dem Anlenken der Sperrklinke an dem Pedalkörper (2) dienen.

## Claims

1. Bicycle pedal with automatic engagement and disengagement, including a body (2) rotatable on a pedal axle (3) with:
- a front abutment means (4) adapted to cooperate with a conjugate abutment surface (5) provided on a cleat (6) fixed to the bottom of the sole of the shoe of the user;
- a retaining member (9) rotatable about a geometrical axis (A) parallel to that of the pedal, adapted to be pressed against the cleat by a flexing element (B) to attach the cleat to the pedal, the mean longitudinal direction of the flexing element being orthogonal to the pedal axis, one end of the flexing element being immobilized against the body, the other end being in bearing engagement against the retaining member,
**characterized in that** the flexing element (B) is constituted by a flexing plate (15), and the articulation axle of the retaining member (9) is constituted by a rod (13) that extends transversely under the flexing plate (15), which is in bearing engagement on said articulation axle, the flexing plate functioning in flexion at three points.

2. Pedal according to Claim 1, **characterized in that** the flexing plate (15) is made of composite material.

3. Pedal according to Claim 1 or 2, **characterized in that** the flexing plate (15) is retained by simple bearing engagement against the pedal body (2) and against the retaining member (9), without being built in.

4. Pedal according to any one of the preceding claims, **characterized in that** the rod (13) forming the rotation axle of the retaining member has in its median area (13m) adapted to come to bear against the flexing plate (15) flats (16a, 16b, 16c) distributed over its circumference and situated at different distances from the geometrical axis (A) of the rod, so that by rotation of the rod (13) in bearings provided in the pedal body it is possible to adjust the hardness of the return action exerted by the flexing plate (15).

5. Pedal according to any one of the preceding claims, **characterized in that** the pedal body (2) includes two rearwardly extending extensions (11a, 11b) bracketing the retaining member (9) and including the bearings (12a, 12b) for the rotation axle (13) of this retaining member, the two extensions (11a, 11b) being separated by a free space with no crossmember.

6. Pedal according to any one of the preceding claims, **characterized in that** the retaining member (9) is constituted by a generally U-shaped hoop (10) having two radially oriented branches (10a) connected by a central part (10b) against which one end of the flexing element comes to bear.

7. Pedal according to any one of the preceding claims, **characterized in that** it includes a catch (17) adapted to retain the retaining member (9) in an open position on disengagement of the cleat (6) against the return action exerted by the flexing plate (15) and to release this retaining member on engagement of the cleat.

8. Pedal according to Claim 7, **characterized in that** the catch (17) includes a leaf spring (22) spring-loading it toward an open position.

9. Pedal according to Claim 8, **characterized in that** the leaf spring (22) is made of metal and is moulded into the plastic material catch (17).

10. Pedal according to any one of Claims 7 to 9, **characterized in that** the catch (17) is the shape of a U the ends of the branches of which remote from the crossmember are provided with aligned outwardly oriented pins (18a, 18b) serving to articulate the catch to the pedal body (2).
